(19) Europäisches Patentamt
European Patent Office
Office européen des brevets

(11) **EP 4 571 686 A1**

## (12) EUROPEAN PATENT APPLICATION

(43) Date of publication:
**18.06.2025 Bulletin 2025/25**

(21) Application number: **24218574.2**

(22) Date of filing: **10.12.2024**

(51) International Patent Classification (IPC):
**G06V 40/16** (2022.01)

(52) Cooperative Patent Classification (CPC):
**G06V 40/161**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.12.2023 US 202363608527 P
06.12.2024 US 202418972012**

(71) Applicant: **Harman International Industries, Inc.
Stamford, Connecticut 06901 (US)**

(72) Inventors:
• **VILAYSOUK, Vilayphone**
  **Stamford, 06901 (US)**
• **BASTYR, Kevin J.**
  **Stamford, 06901 (US)**
• **KUCUK, Abdullah**
  **Stamford, 06901 (US)**
• **SRINIDHI, Kadagattur Gopinatha**
  **Stamford, 06901 (US)**

(74) Representative: **Kraus & Lederer PartGmbB
Thomas-Wimmer-Ring 15
80539 München (DE)**

## (54) IMAGE SCALING USING ENROLLMENT

(57) Techniques for image scaling using enrollment are described. In some embodiments, the techniques include acquiring one or more images of a user, and processing the one more images to determine three-dimensional positions of ears of the user based on a three-dimensional enrollment head geometry of the user. The three-dimensional enrollment head geometry is determined based on one or more enrollment images of the user. The techniques further include processing one or more audio signals to generate one or more processed audio signals based on the three-dimensional positions of the ears.

600

FIG. 6

EP 4 571 686 A1

**Description**

**BACKGROUND**

**Field of the Various Embodiments**

This application relates to systems and methods for head and ear tracking, and more specifically, to image scaling using enrollment.

**Description of the Related Art**

Headrest audio systems, seat or chair audio systems, sound bars, vehicle audio systems, and other personal and/or near-field audio systems are gaining popularity. However, the sound experienced by a user of a personal and/or near-field audio system can vary significantly (e.g., 3-6 dB or another value) when a listener moves their head, even very slightly. In the example of headrest audio systems, depending on how the user is positioned in a seat and how the headrest is adjusted, the variation from one person using the audio system to another person can also vary significantly. This level of sound pressure level (SPL) variability makes tuning audio systems difficult. Furthermore, when rendering spatial audio over headrest speakers, this variability causes features like crosstalk cancellation to fail. One way of correcting audio for personal and/or near-field audio systems is camera-based head tracking. Camera-based head tracking is finding its way into vehicles, personal computer gaming, and home theaters as a result of the increasing adoption of driver monitoring systems (DMS), consumer gaming (and other) sound bars that include imaging devices, and web cameras.

However, one drawback of existing camera-based head and/or ear tracking is that the camera image has no physical scale. A camera image includes pixels that are not generally capable of dimensioning or scaling the objects represented therein, because a head or face in the image can be closer or farther away depending on seating position, standing position, and other user positioning. In systems that include scaling, the conventional approach to perform scaling of pixels to distance units involves the use of a presumptive dimension such as an average inter-ocular distance (e.g., distance between the pupils. However, the inter-ocular distance varies significantly between 54 to 68mm for adults. Other presumptive dimensions include average horizontal visible iris diameter (HVID), which can be 11.6mm to 12.0mm, having an average of 11.8 +/- 0.2mm for 50% of people. Some estimates indicate average HVID dimensions of 11.6 +/- 12%, which is unfortunately similar in accuracy to the inter-ocular distance and so is not a high enough tolerance to yield accurate image scaling. The tolerance produced by using presumptive dimensions is an unacceptable tolerance for personal and/or near-field audio systems, such as headrest speaker systems and the like, to account for head movement of a user.

As the foregoing illustrates, what is needed in the art is improved camera-based tracking for audio systems and the like.

**SUMMARY**

One embodiment of the present disclosure sets forth a method that includes acquiring one or more images of a user; processing the one more images to determine three-dimensional positions of ears of the user based on a three-dimensional enrollment head geometry of the user, where the three-dimensional enrollment head geometry is determined based on one or more enrollment images of the user; and processing one or more audio signals to generate one or more processed audio signals based on the three-dimensional positions of the ears.

At least one technical advantage of the disclosed techniques relative to the prior art is that, with the disclosed techniques, accuracy of camera-based head and/or ear tracking is improved. The improved camera-based tracking provides improved noise cancellation, improved crosstalk cancellation, and otherwise improved three-dimensional audio listening experience to users for personal and/or near-field audio systems such as headrest audio systems, seat/chair audio systems, sound bars, vehicle audio systems, and/or the like. The techniques described also enable the use of a single standard imaging camera to track user-specific scaled ear positions in three dimensions. These technical advantages represent one or more technological improvements over prior art approaches.

**BRIEF DESCRIPTION OF THE DRAWINGS**

So that the manner in which the above recited features of the various embodiments can be understood in detail, a more particular description of the inventive concepts, briefly summarized above, may be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.

Figure 1 is a schematic diagram illustrating a computing system according to various embodiments;

Figure 2 is a diagram illustrating the enrollment module of Figure 1, according to various embodiments;

Figure 3 is a diagram illustrating an ear location module, according to various embodiments;

Figure 4 is a diagram illustrating the operation of the tracking application of Figure 1, according to various embodiments;

Figure 5 is a flow diagram of method steps for generating enrollment head geometry, according to various embodiments;

Figure 6 is a flow diagram of method steps for generating user-specific ear locations, according to various embodiments; and

Figure 7 is a flow diagram of method steps for providing user-specific ear locations to an audio application, according to various embodiments.

## DETAILED DESCRIPTION

In the following description, numerous specific details are set forth to provide a more thorough understanding of the various embodiments. However, it will be apparent to one of skilled in the art that the inventive concepts may be practiced without one or more of these specific details.

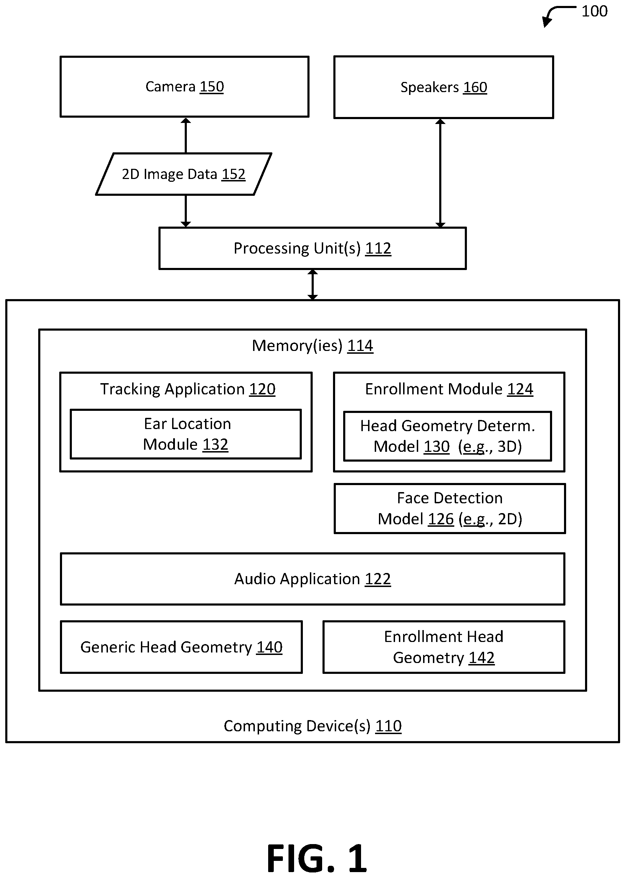

Figure 1 is a schematic diagram illustrating a computing system 100 according to various embodiments. As shown, the computing system 100 includes, without limitation, a computing device 110, one or more cameras 150, and one or more speakers 160. One or more computing devices 110 include, without limitation, one or more processing units 112 and one or more memories 114. In various embodiments, an interconnect bus (not shown) connects the one or more processing units 112, the one or more memories 114, the speakers 160, the one or more cameras 150, and any other components of the computing device 110. The one or more memories 114 store, without limitation, a tracking application 120, an audio application 122, as well as a generic head geometry 140, and an enrollment head geometry 142. The tracking application 120 includes and/or utilizes, without limitation, an enrollment module 124, a face detection model 126, a head geometry determination model 130, and an ear location module 132. While shown separate from the tracking application 120, the enrollment module 124, face detection model 126, and head geometry determination model 130 can include executable instructions that work in concert with the tracking application 120 as subcomponents and/or separate software modules relative to the tracking application 120.

In operation, the computing system 100 processes two-dimensional image data 152 captured using the one or more cameras 150 to perform user-specific image scaling by performing an enrollment of a user. The enrollment generates enrollment head geometry 142 that is user-specific to the user. The two-dimensional image data 152 includes one or more images of the user captured by a camera 150. The camera 150 continues to capture images of the user over time. During enrollment, the enrollment module 124 of the tracking application 120 selects one or more enrollment images based on certain criteria. In some embodiments, the enrollment image(s) are selected from the two-dimensional image data 152 based on successfully detecting a face using the face detection model 126. The face detection model 126 includes a machine-learning model, a rule-based model, or another type of model that takes two-dimensional image data 152 as input and generates two-dimensional landmarks and/or face detection statuses. Additionally or alternatively, the enrollment image(s) are selected as a subset of images from the two-dimensional image data 152 that are associated with a particular head orientation or range of head orientations identified using the head orientation detector of the enrollment module 124. The enrollment module 124 includes a rules-based module or program that detects or identifies a face orientation such as a face orientation status (e.g., centered and/or facing forward, facing upward, facing downward, facing left, facing right). Enrollment includes a relatively short period of time (e.g., within 30 seconds, within 45 seconds, or within 1 minute) that is not required to be performed in real-time. Because the enrollment is relatively fast, in some embodiments, no ear locations are provided in the relatively short enrollment period. However, prior to enrollment, the tracking application 120 is capable of providing generic ear locations based on the generic head geometry 140 and the two-dimensional image data 152 to improve the pre-enrollment performance of the system.

The enrollment module 124 provides the one or more enrollment images as input to the head geometry determination model 130. The head geometry determination model 130 generates a scaled enrollment head geometry 142 based on the one or more enrollment images selected from the two-dimensional image data 152. The head geometry determination model 130 can include a machine-learning model, a rule-based model, or another type of model that takes two-dimensional image data 152 as input and generates three-dimensional enrollment head geometry 142. In some embodiments, inputs to the head geometry determination model 130 include camera data such as sensor size of the camera, a focal distance of the camera, and/or the like. Once enrollment is performed, the tracking application 120 uses the enrollment head geometry 142 and 'live' or most-recently-captured two-dimensional image data 152 to identify user-specific ear locations.

The tracking application 120 identifies a number of pixels between a two-dimensional landmark pair (e.g., identified using the face detection model 126) in the two-dimensional image data 152, and generates a depth estimate generated using the enrollment head geometry 142. The tracking application 120 uses this information to generate ear locations that are scaled, user-specific, and three-dimensional. In some embodiments, the tracking application 120 also provides head orientation data that to the audio application 122.

The tracking application 120 provides the ear locations, and in some embodiments head orientation data, to an audio application 122 that modifies audio signals. As such, the tracking application 120 performs camera-based head and/or ear position tracking based on two-dimensional image data 152 captured using a camera 150. The audio application 122 uses the ear locations, and in some examples head orientation data, speaker configuration data, and/or an input audio signal, to generate a set of modified and/or processed audio signals that affect a sound field and/or provide various adaptive audio effects such as noise cancellation, crosstalk cancellation, spatial/positional audio effects and/or the like, where the adaptive audio effects adapt to the ear position of the user. For example, the audio application 122 can identify one or more head-related transfer functions (HRTFs) based on the ear locations, head orientation, and speaker configuration. In some examples, the HRTFs are ear-specific to each ear. The audio application 122 modifies one or more speaker-specific audio signals based on the HRTFs to maintain a desired audio effect that dynamically adapts to the ear positions. In some embodiments, the audio application 122 generates a set of modified or processed audio signals corresponding to a set of speakers 160. Once enrollment is performed, the tracking application 120 provides the scaled user-specific ear locations in real-time (e.g., within 10ms), or near-real-time (e.g. within 100ms).

In various embodiments, the one or more computing devices 110 are included in a vehicle system, a home theater system, a soundbar and/or the like. In some embodiments, one or more computing devices 110 are included in one or more devices, such as consumer products (e.g., portable speakers, gaming, etc. products), vehicles (e.g., the head unit of an automobile, truck, van, etc.), smart home devices (e.g., smart lighting systems, security systems, digital assistants, etc.), communications systems (e.g., conference call systems, video conferencing systems, speaker amplification systems, etc.), and so forth. In various embodiments, one or more computing devices 110 are located in various environments including, without limitation, indoor environments (e.g., living room, conference room, conference hall, home office, etc.), and/or outdoor environments, (e.g., patio, rooftop, garden, etc.). The computing device 110 is also able to provide audio signals (e.g., generated using the audio application 122) to speaker(s) 160 to generate a sound field that provides various audio effects.

The one or more processing units 112 can be any suitable processor, such as a central processing unit (CPU), a graphics processing unit (GPU), an application-specific integrated circuit (ASIC), a field programmable gate array (FPGA), a digital signal processor (DSP), and/or any other type of processing unit, or a combination of different processing units, such as a CPU configured to operate in conjunction with a GPU and/or a DSP. In general, a processing unit 112 can be any technically feasible hardware unit capable of processing data and/or executing software applications.

Memory 114 can include a random-access memory (RAM) module, a flash memory unit, or any other type of memory unit or combination thereof. Processing units 112 are configured to read data from and write data to the memory 114. In various embodiments, a memory 114 includes non-volatile memory, such as optical drives, magnetic drives, flash drives, or other storage. In some embodiments, separate data stores, such as an external data stores included in a network ("cloud storage") can supplement the memory 114. The one or more memories 114 store, without limitation, tracking application 120, audio application 122, as well as generic head geometry 140 and enrollment head geometry 142. The tracking application 120 within the one or more memories 114 can be executed by one or more processing units 112 to implement the overall functionality of the one or more computing devices 110 and, thus, to coordinate the operation of the computing system 100 as a whole.

The one or more cameras 150 include various types of cameras for capturing two-dimensional images of the user. The one or more cameras 150 include a camera of a DMS in a vehicle, a sound bar, a web camera, and/or the like. In some embodiments, the one or more cameras 150 include only a single standard two-dimensional imager without stereo or depth capabilities. In some embodiments, the computing system 100 includes other types of sensors in addition to the one or more cameras 150 to acquire information about the acoustic environment. Other types of sensors include, without limitation, motion sensors, such as an accelerometer or an inertial measurement unit (IMU) (e.g., a three-axis accelerometer, gyroscopic sensor, and/or magnetometer), pressure sensors, and so forth. In addition, in some embodiments, sensor(s) can include wireless sensors, including radio frequency (RF) sensors (e.g., sonar and radar), and/or wireless communications protocols, including Bluetooth, Bluetooth low energy (BLE), cellular protocols, and/or near-field communications (NFC).

The speakers 160 include various speakers for outputting audio to create the sound field or the various audio effects in the vicinity of the user. In some embodiments, the speakers 160 include two or more speakers located in a headrest of a seat such as a vehicle seat or a gaming chair, or another user-specific speaker set connected or positioned for use by a single user, such as a personal and/or near-field audio system. In some embodiments, the speakers 160 are associated with a speaker configuration stored in the memory 114. The speaker configuration indicates locations and/or orientations of the speakers 160 in a three-dimensional space and/or relative to one another and/or relative to a vehicle, a vehicle seat, a gaming chair, a location of the camera 150, and/or the like. The audio application 122 can retrieve or otherwise identify the speaker configuration of the speakers 160.

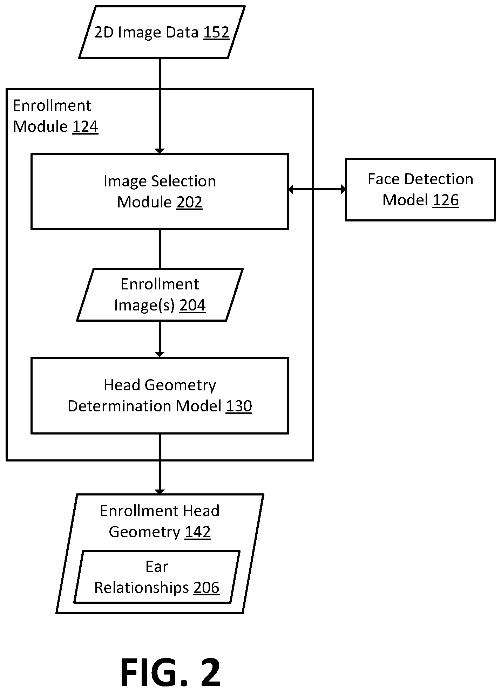

Figure 2 is a diagram illustrating the enrollment module 124 of Figure 1, according to various embodiments. As shown, the enrollment module 124 includes, without limitation, an image selection module 202, and the head geometry determination model 130. The enrollment module 124 processes two-dimensional image data 152 as input to generate or output the enrollment head geometry 142. The image selection module 202 includes and/or utilizes, without limitation, the face detection model 126.

The enrollment module 124 receives two-dimensional image data 152 captured using a camera 150. In some embodiments, the tracking application 120 acquires the two-dimensional image data 152 from the camera 150 and provides the two-dimensional image data 152 to the enrollment module 124. The enrollment module 124 receives the two-dimensional image data 152 as one or more two-dimensional images.

The image selection module 202 selects one or more of the images to be enrollment images 204. In some embodiments, a single enrollment image 204 is selected. However, the image selection module 202 selects any particular number of enrollment images 204 from the two-dimensional image data 152. The image selection module 202 analyzes the two-dimensional image data 152 (e.g., one or more images) to confirm that each enrollment image 204 conforms to one or more criteria. The criteria can specify for the image selection module 202 to select enrollment images 204 for which the face detection model 126 provides a face detection status and/or other data indicating that a face is detected. In some embodiments, the image selection module 202 uses the detection of facial landmarks as data indicating that a face is detected in an image. In some embodiments, the criteria also specifies for the image selection module 202 to select enrollment images 204 for which the particular face orientation status is identified. The image selection module 202 includes rules-based module or program that identifies a face orientation and generates a face orientation status (e.g., centered and/or facing forward, facing upward, facing downward, facing left, facing right) for a particular image. Alternatively, the image selection module 202 references a head orientation identified by comparing or analyzing two-dimensional landmark coordinates (e.g., from the face detection model 126) in view of locations of corresponding landmarks in the generic head geometry 140. The criteria specifies a particular head orientation or a range of head orientations. In some embodiments, the criteria can specify for the image selection module 202 to select multiple enrollment images 204 corresponding to a set of different face and/or head orientations.

The image selection module 202 provides the enrollment images 204 to the head geometry determination model 130. The head geometry determination model 130 generates enrollment head geometry 142 that includes a three-dimensional representation of the user's head. The head geometry determination model 130 is trained and/or configured to generate three-dimensional enrollment head geometry 142 that includes three-dimensional locations (e.g., positions or location in three dimensions) for one or more landmarks. The landmarks include, without limitation, each eye (e.g., center, outer point, inner point, etc.), each eyebrow (e.g., outer point, inner point, midpoint, etc.), the nose (e.g., bridge, tip, base, root/radix, glabella, etc.), mouth (e.g., left point, right point, upper midpoint, lower midpoint, etc.), jawline (e.g., left point, right point, upper midpoint, lower midpoint, etc.), each ear (e.g., ear canal, etc.), and/or the like. The head geometry determination model 130 can take a longer period of time (e.g., relative to the face detection model 126) to process two-dimensional image data 152 and generate the three-dimensional enrollment head geometry 142. As a result, the enrollment process is often not a real-time process. However, the enrollment head geometry 142 generated using the head geometry determination model 130 provides improved accuracy of ear locations relative to using the generic head geometry 140. The improved ear location accuracy provides noticeable improvements to user experience particularly for personal and/or near-field audio systems such as headrest audio systems.

In order to account for the lack of ear landmarks from the face detection model 126, the head geometry determination model 130 generates and/or includes ear relationships 206. The ear relationships 206 include a set of three-dimensional relationship vectors. The ear relationships 206 relate one or more landmarks that are generated by the face detection model 126 (and the head geometry determination model 130), to ear locations. In one example, the landmark ear relationships 206 relate both ears to a single landmark such as a chin landmark or a nose landmark. Alternatively, each ear is related to a different landmark. In some embodiments the head geometry determination model 130 does not generate ear landmarks and the ear relationships 206 are static relationships such as predetermined or preconfigured relationships. The ear relationships 206 can include a relationship between the ears and the landmarks that is incorporated in the enrollment head geometry 142 (or the generic head geometry 140).

The run time of the face detection model 126 is shorter than that of the head geometry determination model 130, enabling the tracking application 120 to use the face detection model 126 in combination with the enrollment head geometry 142, and head orientation data to generate three-dimensional ear positions in real-time, or near-real-time. The face detection model 126 generates two-dimensional landmarks based on the two-dimensional image data 152. The face detection model 126 is trained and/or configured to generate two-dimensional locations (e.g., positions or location in two dimensions) corresponding to one or more landmarks. The landmarks include, without limitation, each eye (e.g., center, outer point, inner point, etc.), each eyebrow (e.g., outer point, inner point, midpoint, etc.), the nose (e.g., bridge, tip, base, root/radix, glabella, etc.), mouth (e.g., left point, right point, upper midpoint, lower midpoint, etc.), jawline (e.g., left point, right point, upper midpoint, lower midpoint, etc.), each ear (e.g., ear canal, etc.), and/or the like. In some embodiments, the face detection model 126 does not provide two-dimensional landmark positions for the ears. In some embodiments, the face detection model 126 and the enrollment head geometry 142 generate landmark pairs (in two-dimensional space and three-dimensional space, respectively) that include, without limitation, the edges of both eyes (e.g., outer edges), a bridge to chin landmark pair, a bridge to right jawline landmark pair, a left eye inner edge to left jawline landmark pair, and a right eyebrow inner edge to left jawline pair.

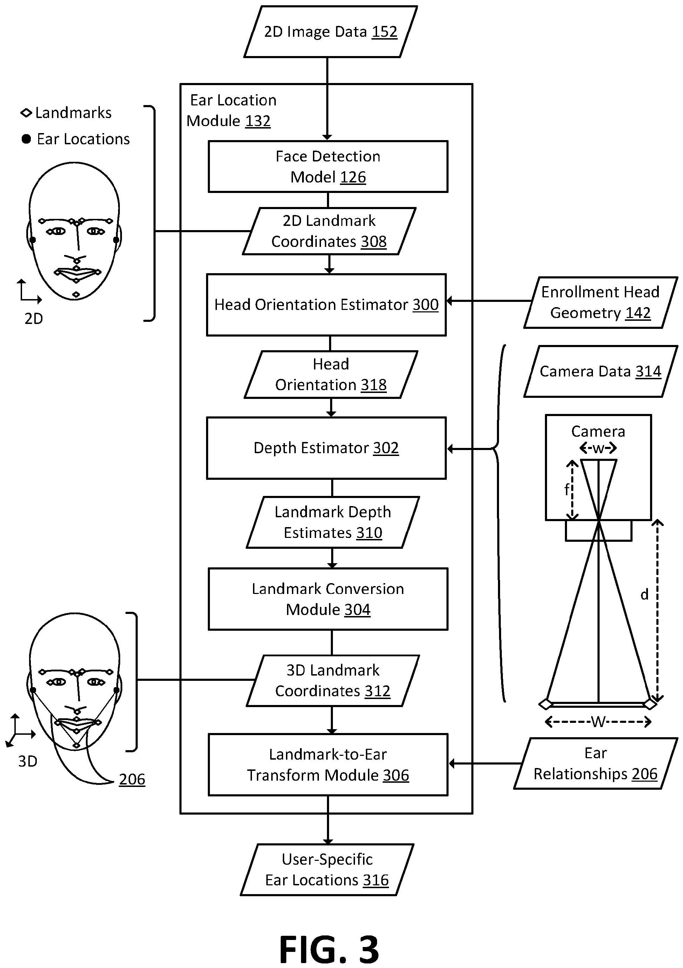

Figure 3 is a diagram illustrating an ear location module 132, according to various embodiments. As shown, the ear location module 132 includes and/or utilizes, without limitation, the face detection model 126, a head orientation estimator 300, a depth estimator 302, a landmark conversion module 306, and a landmark-to-ear transform module 306. The ear location module 132 receives and/or retrieves and processes the two-dimensional image data 152. The ear location process produces intermediate data including, without limitation, a head orientation 318, two-dimensional landmark coordinates 308, landmark depth estimates 310, and three-dimensional landmark coordinates 312. The ear location module 132 generates data that includes, without limitation, the user-specific ear locations 316.

The ear location module 132 uses the face detection model 126 to generate two-dimensional landmark coordinates 308. The face detection model 126 generates two-dimensional landmark coordinates 308 based on the two-dimensional image data 152. The two-dimensional landmark coordinates 308 are two-dimensional locations for one or more landmarks including, without limitation, one or more eye landmarks (e.g., center, outer point, inner point, etc.), one or more eyebrow landmarks (e.g., outer point, inner point, midpoint, etc.), one or more nose landmarks (e.g., bridge, tip, base, root/radix, glabella, etc.), one or more mouth landmarks (e.g., left point, right point, upper midpoint, lower midpoint, etc.), one or more jawline landmarks (e.g., left point, right point, upper midpoint, lower midpoint, etc.), and two or more ear landmarks (e.g., left ear canal, right ear canal, etc.), and/or the like. However, in some embodiments the face detection model 126 does not provide ear landmarks. The face detection model 126 stores or otherwise provides the two-dimensional landmark coordinates 308 to the depth estimator 302.

The head orientation estimator 300 generates a head orientation 318 based on the two-dimensional landmark coordinates 308 and the enrollment head geometry 142. The enrollment head geometry 142 includes three-dimensional locations corresponding to the two-dimensional locations of the two-dimensional landmark coordinates 308. As a result, the head orientation estimator 300 can analyze the two-dimensional landmark coordinates 308 and the enrollment head geometry 142 to identify a head orientation 318 such as a three-dimensional orientation vector. The orientation vector enables the depth estimator 302 to more accurately identify landmark depth estimates 310.

The depth estimator 302 generates landmark depth estimates 310 for respective ones and/or pairs of the two-dimensional landmark coordinates 308. A pair of two-dimensional landmark coordinates 308 can include a bridge-to-chin pair, a glabella-to-chin pair, a glabella-to-nasal-base pair, or another pair that is primarily vertical (e.g., having a greatest difference between the coordinates in a vertical dimension). A pair of two-dimensional landmark coordinates 308 can include an eye-to-eye pair, a jaw-to-jaw pair, or another pair that is primarily horizontal (e.g., greatest difference between the coordinates is in a horizontal dimension). However, any landmark pair can be used. Accuracy is increased for landmark pairs that have a greater distance between them. As a result, the bridge-to-chin pair or the glabella-to-chin pair can provide greater accuracy in some embodiments.

The depth estimator 302 uses one or more of the head orientation 318 the two-dimensional landmark coordinates 308, the enrollment head geometry 142, and the camera data 314 to generate the landmark depth estimates 310. The landmark depth estimates 310 can be considered a scaling factor that scales the three-dimensional landmark coordinates 312. The depth estimator 302 generates the landmark depth estimates 310 based on equation (1).

$$d_{est} = \frac{f * W}{w} \qquad (1)$$

In equation (1), a focal length of the camera 150 is indicated as f. The distance between a pair of two-dimensional landmark coordinates 308 is indicated as upper case W. The distance between a pair of two-dimensional landmark coordinates 308 in an image (e.g., two-dimensional image data 152) is indicated as lower case w. The landmark depth estimate 310 for a particular two-dimensional landmark coordinates 308 or landmark pair is indicated as $d_{est}$. The focal length of the camera 150 is included in the camera data 314. The distance w in an image can be indicated in a number of pixels, and/or can be generated by multiplying the number of pixels by a physical width of each pixel. The physical width of each pixel can be included in the camera data 314. Equation (1) considers an example where a line connecting the pair of two-dimensional landmark coordinates 308 is orthogonal to a direction that the camera 150 is facing. However, the depth estimator 302 can use the head orientation 318 to improve the accuracy of each landmark depth estimate 310 by accounting for any relationship between the two-dimensional landmark coordinates 308 (e.g., based on the head orientation 318).

The landmark conversion module 304 generates user-specific three-dimensional landmark coordinates 312 using the two-dimensional landmark coordinates 308 and the corresponding landmark depth estimates 310. In some embodiments, three-dimensional landmark coordinates 312 are generated using equations (2)-(4).

$$X = \left(X_{img} - P_x\right) * d_{est} \qquad (2)$$

$$Y = \left(Y_{img} - P_y\right) * d_{est} \qquad (3)$$

$$Z = d_{est} \qquad (4)$$

In equations (2)-(4), X, Y, and Z are three-dimensional landmark coordinates 312 corresponding to three-dimensional landmarks in a three-dimensional space. $X_{img}$ and $Y_{img}$ are two-dimensional landmark coordinates 308 generated by the face detection model 126.

The landmark-to-ear transform module 306 generates the user-specific ear locations 316 based on the three-dimensional landmark coordinates 312. The landmark-to-ear transform module 306 transforms the one or more three-dimensional landmark coordinates 312 into user-specific ear locations 316 by applying the ear relationships 206 to the three-dimensional landmark coordinates 312 indicated as starting points for the ear relationships 206. The ear relationships 206 include a set of three-dimensional relationship vectors, one for each ear. Each ear relationship 206 includes a magnitude and a three-dimensional direction. The landmark-to-ear transform module 306 calculates an ear location by setting an initial or starting point of an ear relationship 206 at the three-dimensional landmark coordinates 312 for a particular landmark in the enrollment head geometry 142. The landmark-to-ear transform module 306 identifies the user-specific ear locations 316 as three-dimensional coordinates at a location of the endpoint or terminal point of the ear relationship 206. In some embodiments, the landmark-to-ear transform module 306 also uses the head orientation 318, for example, by rotating the ear relationships 206 about a predetermined point in three-dimensional space. For example, if a user is looking to the left (or right), ear relationships 206 are different than if the user is looking straight forward. In an instance in which the two-dimensional landmark coordinates 308 and the three-dimensional landmark coordinates 312 include ear landmarks, no landmark-to-ear transform is performed. Rather, the ear location module 132 utilizes the three-dimensional landmark coordinates 312 for the ear landmarks as the user-specific ear locations 316. While a generic ear location can be generated by applying generic ear relationships to the generic head geometry 140, the result would not be scaled to the user. By contrast, the ear relationships 206, the three-dimensional landmark coordinates 312, and the enrollment head geometry 142 are scaled to the user.

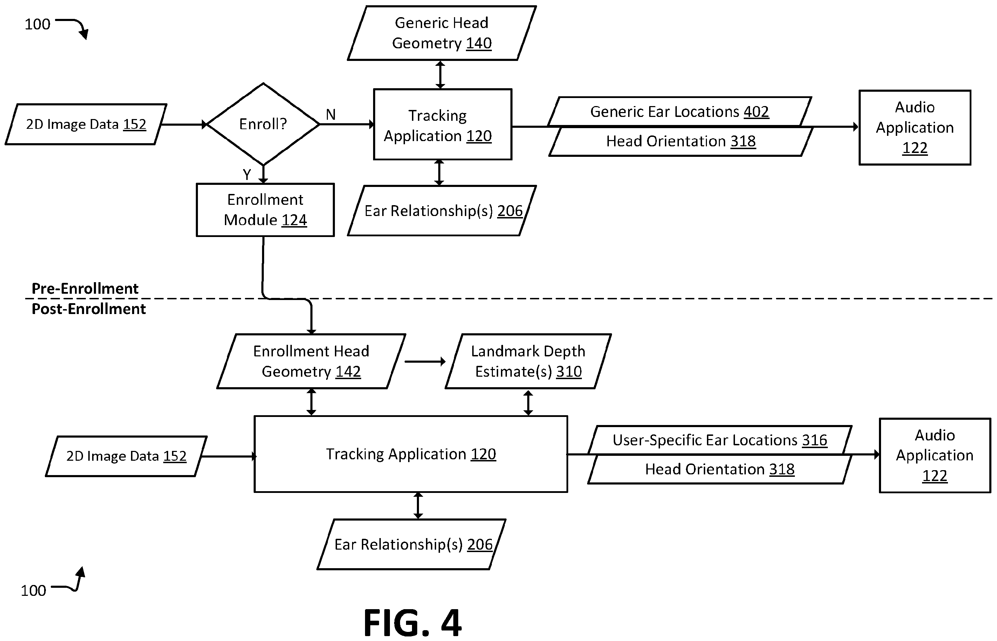

Figure 4 is a diagram illustrating the operation of the tracking application 120 of Figure 1, according to various embodiments. The tracking application 120 operates as part of the computing system 100. As shown, the computing system 100 in the pre-enrollment state includes and/or utilizes, without limitation, two-dimensional image data 152, the tracking application 120, the enrollment module 124, the generic head geometry 140, the ear relationships 206, generic ear locations 402, head orientation 318, and the audio application 122. As shown, the computing system 100 in the steady state (e.g., once enrollment is completed) includes and/or utilizes, without limitation, two-dimensional image data 152, the tracking application 120, enrollment head geometry 142, landmark depth estimates 310, ear relationships 206, user-specific ear locations 316, the head orientation 318, and the audio application 122.

A camera 150 captures and provides two-dimensional image data 152. If enrollment is not completed, the head orientation 318 is identified by comparing or analyzing two-dimensional landmark coordinates 308 (e.g., from the face detection model 126) in view of locations of corresponding landmarks in the generic head geometry 140. The tracking application 120 uses the head orientation 318 to generate generic depth estimates. The tracking application 120 uses the generic depth estimates to identify generic three-dimensional landmark coordinates.

Following an example where enrollment is not completed, the tracking application 120 receives two-dimensional image data 152 from the camera 150. The tracking application 120 processes the two-dimensional image data 152 using the generic head geometry 140 to generate generic ear locations 402. For example, the tracking application 120 identifies two-dimensional landmark coordinates 308 using a face detection model 126. The tracking application 120 translates the two-dimensional landmark coordinates 308 to generic ear locations 402 based on the generic head geometry 140 and ear relationships 206. In some examples, the tracking application 120 modifies the generic three-dimensional landmark coordinates using generic ear relationships to generate the generic ear locations 402. The generic ear locations 402 are not as accurate as the user-specific ear locations 316 generated using the enrollment head geometry 142. However, the generic ear locations 402 improve the pre-enrollment audio experience for the user. The tracking application 120 provides the generic ear locations 402 and the head orientation 318 to the audio application 122. The audio application 122 uses the generic ear locations 402 and the head orientation 318 to generate processed audio signals. The computing system 100 uses the processed audio signals to generate a sound field that includes one or more audio effects that are dynamically adapted to the user in real-time based on the generic ear locations 402 and the head orientation 318.

Following an example where enrollment is performed, the enrollment module 124 receives two-dimensional image data 152 from the camera 150. The enrollment module 124 generates the enrollment head geometry 142 using the two-dimensional image data 152. The enrollment module 124 identifies whether the face detection model 126 detects a face (e.g., generates a set of two-dimensional landmark coordinates 308). The enrollment module 124 also identifies whether an orientation of the head is within a range of orientations. If an image includes a face and has an orientation in the range of orientations then the enrollment module 124 selects the image as an enrollment image 204. The enrollment module 124 uses one or more enrollment images to generate the enrollment head geometry 142. Further details of the operation of the enrollment module 124 are described with respect to Figure 2.

Once enrollment is completed and the enrollment head geometry 142 is available, the tracking application 120 processes the two-dimensional image data 152 using the enrollment head geometry 142 to generate user-specific ear locations 316. For example, the tracking application 120 identifies two-dimensional landmark coordinates 308 using a face detection model 126. The tracking application 120 generates landmark depth estimates 310 using the enrollment head geometry 142 and camera data 314. The tracking application 120 processes the two-dimensional landmark coordinates 308 to generate three-dimensional landmark coordinates 312 that are scaled to the user based on the landmark depth estimates 310. The tracking application 120 determines the user-specific ear locations 316 based on the three-dimensional landmark coordinates 312 and the ear relationships 206. Further details of generating user-specific ear locations 316 are described with respect to Figure 3. The tracking application 120 provides the user-specific ear locations 316 and the head orientation 318 to the audio application 122. The audio application 122 uses the user-specific ear locations 316 and the head orientation 318 to generate processed audio signals. The computing system 100 uses the processed audio signals to generate a sound field that includes one or more audio effects that are dynamically adapted to the user in real-time based on the user-specific ear locations 316 and the head orientation 318.

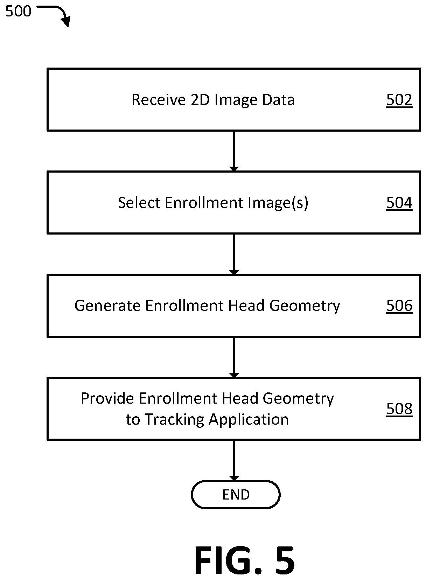

Figure 5 is a flow diagram of method steps for generating enrollment head geometry, according to various embodiments. Although the method steps are shown in an order, persons skilled in the art will understand that some method steps may be performed in a different order, repeated, omitted, and/or performed by components other than those described in Figure 5. Although the method steps are described with respect to the systems of Figures 1-4, persons skilled in the art will understand that any system configured to perform the method steps, in any order, falls within the scope of the various embodiments.

As shown, a method 500 begins at step 502, where the enrollment module 124 receives two-dimensional image data 152 captured using a camera 150. In some embodiments, the tracking application 120 acquires the two-dimensional image data 152 from the camera 150 and provides the two-dimensional image data 152 to the enrollment module 124. The enrollment module 124 receives the two-dimensional image data 152 as one or more two-dimensional images.

At step 504, the image selection module 202 selects one or more enrollment images 204 from the two-dimensional image data 152. In some embodiments, a single enrollment image 204 is selected. However, the image selection module 202 selects any particular number of enrollment images 204 from the two-dimensional image data 152. The image selection module 202 analyzes the two-dimensional image data 152 (e.g., one or more images) to confirm that each enrollment image 204 conforms to one or more criteria. The criteria can specify for the image selection module 202 to select enrollment images 204 for which the face detection model 126 indicates that a face is detected. In some embodiments, the criteria also specifies for the image selection module 202 to select enrollment images 204 for which a head orientation detector of the enrollment module 124 indicates a particular head orientation or a range of head orientations. In some embodiments, the criteria can specify for the image selection module 202 to select multiple enrollment images 204 corresponding to a set of different head orientations.

At step 506, the enrollment module 124 generates enrollment head geometry 142 based on the enrollment images 204. The image selection module 202 provides the enrollment images 204 to the head geometry determination model 130. The head geometry determination model 130 generates enrollment head geometry 142 that includes three-dimensional locations for one or more three-dimensional landmark coordinates 312, as well as a three-dimensional representation of the user's head. In some embodiments, the enrollment head geometry 142 includes ear relationships 206. The ear relationships 206 include a set of three-dimensional relationship vectors that relate one or more landmarks to ear locations. In some embodiments, the ear locations are three-dimensional landmark coordinates 312.

At step 508, the enrollment module 124 provides enrollment head geometry 142 to a tracking application 120. For example, the enrollment module 124 stores the enrollment head geometry 142 in a memory that is accessible to the tracking application 120. In some embodiments, the enrollment module 124 transmits a message to the tracking application 120, indicating that the enrollment head geometry 142 is available.

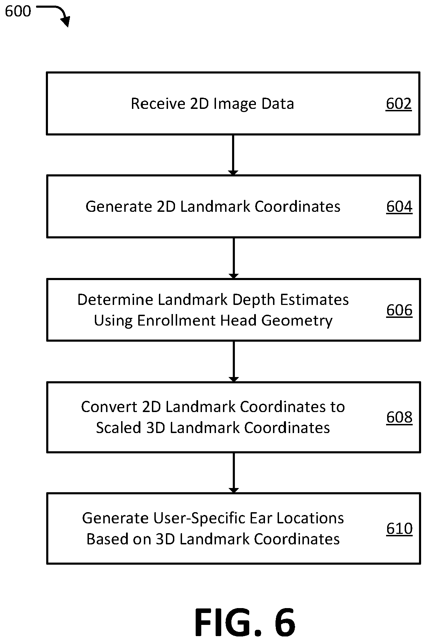

Figure 6 is a flow diagram of method steps for generating user-specific ear locations, according to various embodiments. Although the method steps are shown in an order, persons skilled in the art will understand that some method steps may be performed in a different order, repeated, omitted, and/or performed by components other than those described in Figure 6. Although the method steps are described with respect to the systems of Figures 1-4, persons skilled in the art will understand that any system configured to perform the method steps, in any order, falls within the scope of the various embodiments.

As shown, a method 600 begins at step 602, where the tracking application 120 receives two-dimensional image data 152. The tracking application 120 retrieves the two-dimensional image data 152 from a memory 114 and/or receives the two-dimensional image data 152 from the camera 150. The two-dimensional image data 152 can include one or more images captured using the camera 150. The tracking application 120 receives and/or retrieves updated two-dimensional image data 152 over time to provide user-specific ear locations 316 that are dynamically updated in real-time.

At step 604, the tracking application 120 generates two-dimensional landmark coordinates 308. The tracking application 120 uses a face detection model 126 to generate two-dimensional landmark coordinates 308 based on the two-dimensional image data 152. The two-dimensional landmark coordinates 308 are two-dimensional locations for one or more landmarks including, without limitation, one or more eye landmarks (e.g., center, outer point, inner point, etc.), one or more eyebrow landmarks (e.g., outer point, inner point, midpoint, etc.), one or more nose landmarks (e.g., bridge, tip, base, root/radix, glabella, etc.), one or more mouth landmarks (e.g., left point, right point, upper midpoint, lower midpoint, etc.), one or more jawline landmarks (e.g., left point, right point, upper midpoint, lower midpoint, etc.), and two or more ear landmarks (e.g., left ear canal, right ear canal, etc.), and/or the like. However, in some embodiments the face detection model 126 does not provide ear landmarks. The face detection model 126 stores or otherwise provides the two-dimensional landmark coordinates 308 to the depth estimator 302.

At step 606, the tracking application 120 determines landmark depth estimates 310 using enrollment head geometry 142. The tracking application 120 uses a depth estimator 302 to generate landmark depth estimates 310 for respective ones and/or pairs of the two-dimensional landmark coordinates 308, for example, based on equation (1). The depth estimator 302 uses the two-dimensional landmark coordinates 308, the enrollment head geometry 142, and the camera data 314 to generate the landmark depth estimates 310. The landmark depth estimates 310 can be considered a scaling factor that scales the three-dimensional landmark coordinates 312.

At step 608, the tracking application 120 converts the two-dimensional landmark coordinates 308 into three-dimensional landmark coordinates 312 that are scaled and user-specific to the user. The tracking application 120 uses a landmark conversion module 304 to generate scaled, user-specific three-dimensional landmark coordinates 312 based on the two-dimensional landmark coordinates 308 and the corresponding landmark depth estimates 310, for example, using equations (2)-(4).

At step 610, the tracking application 120 generates user-specific ear locations based on the three-dimensional landmark coordinates 312. The tracking application 120 uses a landmark-to-ear transform module 306 to generate the user-specific ear locations 316 based on the three-dimensional landmark coordinates 312. The landmark-to-ear transform module 306 transforms the one or more three-dimensional landmark coordinates 312 into ear locations by applying the ear relationships 206 to the three-dimensional landmark coordinates 312 indicated in the ear relationships 206. However, in an instance in which the two-dimensional landmark coordinates 308 and the three-dimensional landmark coordinates 312 include ear landmarks, the tracking application 120 identifies the three-dimensional landmark coordinates 312 corresponding to ear landmarks, and uses these three-dimensional landmark coordinates 312 as the user-specific ear locations 316.

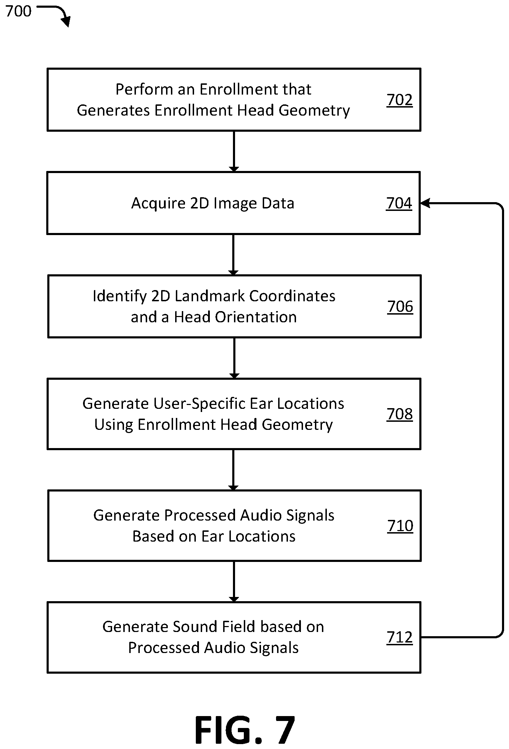

Figure 7 is a flow diagram of method steps for providing user-specific ear locations to an audio application, according to various embodiments. Although the method steps are shown in an order, persons skilled in the art will understand that some method steps may be performed in a different order, repeated, omitted, and/or performed by components other than those described in Figure 7. Although the method steps are described with respect to the systems of Figures 1-4, persons skilled in the art will understand that any system configured to perform the method steps, in any order, falls within the scope of the various embodiments.

As shown, a method 700 begins at step 702, where the tracking application 120 performs enrollment that generates enrollment head geometry 142. The tracking application 120 receives two-dimensional image data 152, for example, from a camera 150. The tracking application 120 uses an enrollment module 124 to generate the enrollment head geometry 142 based on the two-dimensional image data 152. The enrollment module 124 identifies whether the face detection model 126 detects a face. The enrollment module 124 also identifies whether the head orientation detector indicates an orientation is within a range of orientations. If an image includes a face and has an orientation in the range of orientations then the enrollment module 124 selects the image as an enrollment image 204. The enrollment module 124 uses one or more enrollment images to generate the enrollment head geometry 142.

In some embodiments, during the enrollment, the tracking application 120 also processes the two-dimensional image data 152 to generate generic ear locations 402. While enrollment takes a relatively short period of time, the tracking application 120 provides generic ear locations 402 in real-time. As a result, the tracking application 120 can generate many instances of generic ear locations 402 and a head orientation 318 based on updated or newly captured two-dimensional image data 152 until enrollment is completed.

At step 704, the tracking application 120 acquires two-dimensional image data 152. The tracking application 120 receives two-dimensional image data 152 from a camera 150. The tracking application 120 receives updated two-dimensional image data 152 over time. As a result, the two-dimensional image data 152 includes updated image(s) relative to the enrollment image(s) used for enrollment to generate the enrollment head geometry 142.

At step 706, the tracking application 120 identifies two-dimensional landmark coordinates 308 and a head orientation 318. The two-dimensional landmark coordinates 308 and a head orientation 318 are identified using the same subset of images from the two-dimensional image data 152. The tracking application 120 identifies two-dimensional landmark coordinates 308 by processing the two-dimensional image data 152 using a face detection model 126. The tracking application 120 identifies a head orientation 318 by processing the two-dimensional image data 152 using a head orientation estimator 300.

At step 708, the tracking application 120 generates user-specific ear locations 316 using the enrollment head geometry 142. As a result, the user-specific ear locations 316 are scaled and user-specific to the user. The tracking application 120 processes the two-dimensional image data 152 using the enrollment head geometry 142 to generate the user-specific ear locations 316. For example, the tracking application 120 generates landmark depth estimates 310 using the enrollment head geometry 142 and camera data 314. The tracking application 120 processes the two-dimensional landmark coordinates 308 to generate three-dimensional landmark coordinates 312 that are scaled to the user based on the landmark depth estimates 310. The tracking application 120 determines the user-specific ear locations 316 based on the three-dimensional landmark coordinates 312 and the ear relationships 206. Further details of generating user-specific ear locations 316 are described with respect to Figure 3. The tracking application 120 of the computing system 100 provides the user-specific ear locations 316 and the head orientation 318 to the audio application 122 of the computing system 100.

At step 710, the audio application 122 generates the processed audio signals based on the user-specific ear locations 316. In some embodiments, the audio application 122 generates the processed audio signals further based on the head orientation 318. For example, the audio application 122 identifies one or more HRTFs based on the user-specific ear locations 316, head orientation 318, and speaker configuration. The audio application 122 generates the processed audio signals based on the HRTFs to maintain a desired audio effect that dynamically adapts to the user-specific ear locations 316. The processed audio signals are generated to produce a sound field and/or provide various adaptive audio effects such as noise cancellation, crosstalk cancellation, spatial/positional audio effects and/or the like, where the adaptive audio effects adapt to the user-specific ear locations 316 of the user. In some embodiments, the computing system 100 includes one or more microphones, and the audio application 122 uses the microphone audio signal and/or other audio signals to generate the processed audio signals. In some embodiments, the audio application 122 generates the processed audio signals further based on a speaker configuration for a set of speakers 160.

At step 712, the audio application 122 provides the processed audio signals to the speakers 160. The speakers 160 generate a sound field based on the processed audio signals. As a result, the sound field includes one or more audio effects that are dynamically adapted to the user in real-time based on the user-specific ear locations 316 and the head orientation 318. The process proceeds back to step 704 so that the sound field is dynamically adapted based on updated user-specific ear locations 316 identified using updated two-dimensional image data 152.

In sum, techniques are disclosed for implementing image scaling using enrollment for head and ear tracking. Some embodiments involve a method that includes acquiring one or more images of a user; processing the one more images to determine three-dimensional positions of ears of the user based on a three-dimensional enrollment head geometry of the user, where the three-dimensional enrollment head geometry is determined based on one or more enrollment images of the user; and processing one or more audio signals to generate one or more processed audio signals based on the three-dimensional positions of the ears.

At least one technical advantage of the disclosed techniques relative to the prior art is that, with the disclosed techniques, accuracy of camera-based head and/or ear tracking is improved for personal and/or near-field audio systems such as headrest audio systems, seat/chair audio systems, sound bars, vehicle audio systems, and/or the like. The improved camera-based tracking provides improved noise cancellation, improved cross talk cancellation, and otherwise improved three-dimensional audio listening experience to users. The techniques described also disclosed techniques also enable the use of a single standard two-dimensional imaging camera without stereo or depth capabilities to track user-specific scaled ear positions in three dimensions. These technical advantages represent one or more technological improvements over prior art approaches.

Aspects of the disclosure are also described according to the following clauses.

1. In some embodiments, a computer-implemented method comprises acquiring one or more images of a user, processing the one more images to determine three-dimensional positions of ears of the user based on a three-dimensional enrollment head geometry of the user, wherein the three-dimensional enrollment head geometry is determined based on one or more enrollment images of the user, and processing one or more audio signals to generate one or more processed audio signals based on the three-dimensional positions of the ears.

2. The computer-implemented method of clause 1, wherein the one or more enrollment images are selected from the one or more images based on one or more of a face orientation or a face detection status.

3. The computer-implemented method of clauses 1 or 2, wherein the one or more enrollment images of the user are two-dimensional images captured by a camera.

4. The computer-implemented method of any of clauses 1-3, wherein processing the one or more audio signals to generate the one or more processed audio signals is further based on a speaker configuration indicating one or more of locations or orientations of one or more speakers.

5. The computer-implemented method of any of clauses 1-4, wherein the one or more processed audio signals apply one or more audio effects to the one or more audio signals.

6. The computer-implemented method of any of clauses 1-5, wherein determining the three-dimensional positions of the ears of the user comprises generating, based on the one or more images, two-dimensional landmark coordinates for two or more landmarks using a face detection model, and generating, using the enrollment head geometry, three-dimensional landmark coordinates based on the landmark depth estimates for the two-dimensional landmark coordinates, wherein the three-dimensional positions of the ears are based on the three-dimensional landmark coordinates.

7. The computer-implemented method of any of clauses 1-6, further comprising determining a head orientation vector based on the two-dimensional landmark coordinates for the two or more landmarks, and two or more corresponding three-dimensional landmarks in the three-dimensional enrollment head geometry, and determining the landmark depth estimates based on the head orientation vector.

8. The computer-implemented method of any of clauses 1-7, wherein the three-dimensional positions of the ears of the user are determined based on one or more relationships in the enrollment head geometry, wherein the one or more relationships relate the three-dimensional landmark coordinates to the three-dimensional positions of the ears.

9. The computer-implemented method of any of clauses 1-8, wherein the two or more landmarks include one or more of an eye center landmark, an eye outer point landmark, an eye inner point landmark, an eyebrow outer point landmark, and eyebrow inner point, a nose bridge landmark, a nose tip landmark, a nose base landmark, a nose root landmark, a glabella landmark, a mouth tip landmark, an upper lip midpoint landmark, a lower lip midpoint landmark, a chin landmark, or a jawline landmark.

10. The computer-implemented method of any of clauses 1-9, wherein processing the one or more audio signals includes determining one or more head-related transfer functions (HRTFs) based on the three-dimensional positions of the ears, and modifying the one or more audio signals based on the HRTFs to generate the one or more processed audio signals.

11. The computer-implemented method of any of clauses 1-10, further comprising generating, using one or more speakers, a sound field that includes one or more audio effects based on the one or more processed audio signals.

12. The computer-implemented method of any of clauses 1-11, wherein the one or more speakers include one or more of headrest speakers, gaming chair speakers, or sound bar speakers.

13. The computer-implemented method of any of clauses 1-12, wherein the audio effects include one or more of a spatial audio effect, noise cancellation, or crosstalk cancellation.

14. In some embodiments, one or more non-transitory computer-readable media store instructions that, when executed by one or more processors, cause the one or more processors to perform the steps of acquiring two-dimensional image data of a user, determining three-dimensional ear positions of the user based on the two-dimensional image data and a user-specific three-dimensional head geometry, wherein the user-specific three-dimensional head geometry is generated based on a subset of the two-dimensional image data, and generating, using one or more speakers, a sound field that includes one or more audio effects based on the three-dimensional ear positions of the user.

15. The one or more non-transitory computer-readable media of clause 14, further comprising one or more speakers, and wherein the steps further comprise generating, based on the two-dimensional image data, two-dimensional landmark coordinates for two or more landmarks using a face detection model, and generating, using the user-specific three-dimensional head geometry, three-dimensional landmark coordinates based on the and landmark depth estimates for the two-dimensional landmark coordinates, wherein the three-dimensional ear positions are based on the three-dimensional landmark coordinates.

16. The one or more non-transitory computer-readable media of clauses 14 or 15, wherein the audio effects include one or more of a spatial audio effect, noise cancellation, or crosstalk cancellation.

17. The one or more non-transitory computer-readable media of any of clauses 14-16, wherein the generating the one or more processed audio signals is further based on a speaker configuration of the one or more speakers.

18. The one or more non-transitory computer-readable media of any of clauses 14-17, wherein the subset of the two-dimensional image data is selected based on one or more of an indication of face orientation, or an indication of face detection.

19. The one or more non-transitory computer-readable media of any of clauses 14-18, wherein the three-dimensional ear positions are determined based on one or more ear relationships in the user-specific three-dimensional head geometry, wherein the one or more ear relationships relate the three-dimensional landmark coordinates to the three-dimensional positions of the ears.

20. In some embodiments, a system comprises one or more speakers, a camera that captures one or more images of a user, a memory storing instructions, and one or more processors, that when executing the instructions, are configured to perform the steps of determining three-dimensional ear positions of the user based on the one or more images and a three-dimensional enrollment head geometry of the user, wherein the three-dimensional enrollment head geometry is generated based on at least a subset of the one or more images, and generating, using one or more speakers, a sound field that includes one or more audio effects based on the three-dimensional ear positions of the user.

The descriptions of the various embodiments have been presented for purposes of illustration, but are not intended to be exhaustive or limited to the embodiments disclosed. Many modifications and variations will be apparent to those of ordinary skill in the art without departing from the scope and spirit of the described embodiments.

Aspects of the present embodiments may be embodied as a system, method, or computer program product. Accordingly, aspects of the present disclosure may take the form of an entirely hardware embodiment, an entirely software embodiment (including firmware, resident software, micro-code, etc.) or an embodiment combining software and hardware aspects that may all generally be referred to herein as a "module" or "system." Furthermore, aspects of the present disclosure may take the form of a computer program product embodied in one or more computer readable medium(s) having computer readable program code embodied thereon.

Any combination of one or more computer readable medium(s) may be utilized. The computer readable medium may be a computer readable signal medium or a computer readable storage medium. A computer readable storage medium may be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, enable the implementation of the functions/acts specified in the flowchart and/or block diagram block or blocks. Such processors may be, without limitation, general purpose processors, special-purpose processors, application-specific processors, or field-programmable processors or gate arrays.

The flowchart and block diagrams in the figures illustrate the architecture, functionality, and operation of possible implementations of systems, methods, and computer program products according to various embodiments of the present disclosure. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure may be devised without departing from the basic scope thereof, and the scope thereof is determined by the claims that follow.

**Claims**

1. A computer-implemented method, comprising:

   acquiring one or more images of a user;
   processing the one more images to determine three-dimensional positions of ears of the user based on a three-dimensional enrollment head geometry of the user, wherein the three-dimensional enrollment head geometry is determined based on one or more enrollment images of the user; and
   processing one or more audio signals to generate one or more processed audio signals based on the three-dimensional positions of the ears.

2. The computer-implemented method of claim 1, wherein the one or more enrollment images are at least one of the following:

   - selected from the one or more images based on one or more of a face orientation or a face detection status,
   - two-dimensional images captured by a camera.

3. The computer-implemented method of any preceding claim, wherein processing the one or more audio signals to generate the one or more processed audio signals is further based on a speaker configuration indicating one or more of locations or orientations of one or more speakers.

4. The computer-implemented method of any preceding claim, wherein the one or more processed audio signals apply one or more audio effects to the one or more audio signals.

5. The computer-implemented method of any preceding claim, wherein determining the three-dimensional positions of the ears of the user comprises:

   generating, based on the one or more images, two-dimensional landmark coordinates for two or more landmarks using a face detection model; and
   generating, using the enrollment head geometry, three-dimensional landmark coordinates based on the landmark depth estimates for the two-dimensional landmark coordinates, wherein the three-dimensional positions of the ears are based on the three-dimensional landmark coordinates.

6. The computer-implemented method of claim 5, further comprising:

   determining a head orientation vector based on the two-dimensional landmark coordinates for the two or more landmarks, and two or more corresponding three-dimensional landmarks in the three-dimensional enrollment head geometry; and
   determining the landmark depth estimates based on the head orientation vector.

7. The computer-implemented method of claim 5 or 6, wherein the three-dimensional positions of the ears of the user are determined based on one or more relationships in the enrollment head geometry, wherein the one or more relationships relate the three-dimensional landmark coordinates to the three-dimensional positions of the ears.

8. The computer-implemented method of any of claims 5 to 7, wherein the two or more landmarks include one or more of an eye center landmark, an eye outer point landmark, an eye inner point landmark, an eyebrow outer point landmark, and eyebrow inner point, a nose bridge landmark, a nose tip landmark, a nose base landmark, a nose root landmark, a glabella landmark, a mouth tip landmark, an upper lip midpoint landmark, a lower lip midpoint landmark, a chin landmark, or a jawline landmark.

9. The computer-implemented method of any preceding claim, wherein processing the one or more audio signals includes:

   determining one or more head-related transfer functions, HRTFs, based on the three-dimensional positions of the ears; and
   modifying the one or more audio signals based on the HRTFs to generate the one or more processed audio signals.

10. The computer-implemented method of any preceding claim, further comprising:
    generating, using one or more speakers, a sound field that includes one or more audio effects based on the one or more processed audio signals.

11. The computer-implemented method of claim 10, wherein the one or more speakers include one or more of headrest speakers, gaming chair speakers, or sound bar speakers.

12. The computer-implemented method of claim 10 or 11, wherein the audio effects include one or more of a spatial audio effect, noise cancellation, or crosstalk cancellation.

13. One or more non-transitory computer-readable media storing instructions that, when executed by one or more processors, cause the one or more processors to perform the steps of:

    acquiring two-dimensional image data of a user;
    determining three-dimensional ear positions of the user based on the two-dimensional image data and a user-specific three-dimensional head geometry, wherein the user-specific three-dimensional head geometry is generated based on a subset of the two-dimensional image data; and
    generating, using one or more speakers, a sound field that includes one or more audio effects based on the three-dimensional ear positions of the user.

14. The one or more non-transitory computer-readable media of claim 13, further comprising one or more speakers, and wherein the steps further comprise:

    generating, based on the two-dimensional image data, two-dimensional landmark coordinates for two or more landmarks using a face detection model; and
    generating, using the user-specific three-dimensional head geometry, three-dimensional landmark coordinates based on the and landmark depth estimates for the two-dimensional landmark coordinates, wherein the three-dimensional ear positions are based on the three-dimensional landmark coordinates.

15. A system comprising:

    one or more speakers;
    a camera that captures one or more images of a user;
    a memory storing instructions; and
    one or more processors, that when executing the instructions, are configured to perform the steps of:

       determining three-dimensional ear positions of the user based on the one or more
       images and a three-dimensional enrollment head geometry of the user, wherein the three-dimensional enrollment head geometry is generated based on at least a subset of the one or more images; and

    generating, using one or more speakers, a sound field that includes one or more audio effects based on the three-dimensional ear positions of the user.

100

| Camera 150 | Speakers 160 |
|---|---|

2D Image Data 152

Processing Unit(s) 112

**Memory(ies) 114**

Tracking Application 120

Ear Location
Module 132

Enrollment Module 124

Head Geometry Determ.
Model 130 (e.g., 3D)

Face Detection
Model 126 (e.g., 2D)

Audio Application 122

Generic Head Geometry 140

Enrollment Head
Geometry 142

Computing Device(s) 110

# FIG. 1

2D Image Data 152

Enrollment
Module 124

Image Selection
Module 202

Face Detection
Model 126

Enrollment
Image(s) 204

Head Geometry
Determination Model 130

Enrollment Head
Geometry 142

Ear
Relationships 206

# FIG. 2

Landmarks
● Ear Locations

2D

**2D Image Data 152**

Ear Location Module 132

Face Detection Model 126

2D Landmark Coordinates 308

Head Orientation Estimator 300 ← Enrollment Head Geometry 142

Head Orientation 318

Camera Data 314

Depth Estimator 302

Landmark Depth Estimates 310

Landmark Conversion Module 304

3D Landmark Coordinates 312

Landmark-to-Ear Transform Module 306 ← Ear Relationships 206

3D

206

Camera
←-w-→
f
d
←----W----→

User-Specific Ear Locations 316

# FIG. 3

100 →

2D Image Data 152

Enroll?
N → Generic Head Geometry 140 → Tracking Application 120
Y → Enrollment Module 124

Tracking Application 120 ↔ Ear Relationship(s) 206

Generic Ear Locations 402
Head Orientation 318
→ Audio Application 122

Pre-Enrollment
Post-Enrollment

2D Image Data 152

Enrollment Head Geometry 142 → Landmark Depth Estimate(s) 310

Enrollment Head Geometry 142 ↔ Tracking Application 120 ↔ Ear Relationship(s) 206

User-Specific Ear Locations 316
Head Orientation 318
→ Audio Application 122

100 →

FIG. 4

500

```
┌─────────────────────────────────────────────┐
│   Receive 2D Image Data              502     │
└─────────────────────────────────────────────┘
                      │
                      ▼
┌─────────────────────────────────────────────┐
│   Select Enrollment Image(s)         504     │
└─────────────────────────────────────────────┘
                      │
                      ▼
┌─────────────────────────────────────────────┐
│   Generate Enrollment Head Geometry  506     │
└─────────────────────────────────────────────┘
                      │
                      ▼
┌─────────────────────────────────────────────┐
│   Provide Enrollment Head Geometry           │
│   to Tracking Application            508     │
└─────────────────────────────────────────────┘
                      │
                      ▼
                ╭───────────╮
                │    END    │
                ╰───────────╯
```

# FIG. 5

600

```
┌─────────────────────────────────────────────┐
│   Receive 2D Image Data              602      │
└─────────────────────────────────────────────┘
                      │
                      ▼
┌─────────────────────────────────────────────┐
│   Generate 2D Landmark Coordinates   604      │
└─────────────────────────────────────────────┘
                      │
                      ▼
┌─────────────────────────────────────────────┐
│   Determine Landmark Depth Estimates          │
│   Using Enrollment Head Geometry     606      │
└─────────────────────────────────────────────┘
                      │
                      ▼
┌─────────────────────────────────────────────┐
│   Convert 2D Landmark Coordinates to          │
│   Scaled 3D Landmark Coordinates     608      │
└─────────────────────────────────────────────┘
                      │
                      ▼
┌─────────────────────────────────────────────┐
│   Generate User-Specific Ear Locations        │
│   Based on 3D Landmark Coordinates   610      │
└─────────────────────────────────────────────┘
```

# FIG. 6

700

| Perform an Enrollment that Generates Enrollment Head Geometry | 702 |

| Acquire 2D Image Data | 704 |

| Identify 2D Landmark Coordinates and a Head Orientation | 706 |

| Generate User-Specific Ear Locations Using Enrollment Head Geometry | 708 |

| Generate Processed Audio Signals Based on Ear Locations | 710 |

| Generate Sound Field based on Processed Audio Signals | 712 |

# FIG. 7

Europäisches
Patentamt
European
Patent Office
Office européen
des brevets

# EUROPEAN SEARCH REPORT

**Application Number**

EP 24 21 8574

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DELLEPIANE M ET AL: "Reconstructing head models from photographs for individualized 3D-audio processing", CHAPTER 1: MONTE CARLO PATH TRACING, WILEY-BLACKWELL, OXFORD, vol. 27, no. 7, 23 January 2009 (2009-01-23), pages 1719-1727, XP071487533, DOI: 10.1111/J.1467-8659.2008.01316.X * Section 3; figure 11 * | 1-15 | INV. G06V40/16 |
| X,P | GENEROSI ANDREA ET AL: "An Innovative System for Driver Monitoring and Vehicle Sound Interaction", 2024 IEEE INTERNATIONAL WORKSHOP ON METROLOGY FOR AUTOMOTIVE (METROAUTOMOTIVE), IEEE, 26 June 2024 (2024-06-26), pages 159-164, XP034661001, DOI: 10.1109/METROAUTOMOTIVE61329.2024.10615427 [retrieved on 2024-08-06] * Section II * | 1-15 | |

**TECHNICAL FIELDS SEARCHED (IPC)**

G06V

The present search report has been drawn up for all claims

| Place of search | Date of completion of the search | Examiner |
|---|---|---|
| The Hague | 4 April 2025 | Grigorescu, Simona |

EPO FORM 1503 03.82 (P04C01)